# EUROPÄISCHE PATENTSCHRIFT

(11) **EP 3 488 555 B1**
(45) Veröffentlichungstag und Bekanntmachung des Hinweises auf die Patenterteilung: **02.09.2020**
(21) Anmeldenummer: 17737248.9
(22) Anmeldetag: 04.07.2017
(51) Int. Cl.: H04L 9/32

(54) **GESICHERTES VERARBEITEN EINER BERECHTIGUNGSNACHWEISANFRAGE**
SECURE PROCESSING OF AN AUTHORISATION VERIFICATION REQUEST
TRAITEMENT SÉCURISÉ D'UNE DEMANDE D'ATTESTATION D'AUTORISATION

(30) Priorität: 24.08.2016 DE 102016215917
(43) Veröffentlichungstag der Anmeldung: 29.05.2019
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2017/066569
(87) Internationale Veröffentlichungsnummer: WO 2018/036701

(56) Entgegenhaltungen:
- TANAS CRISTIAN ET AL: "An Integrated Reward and Reputation Mechanism for MCS Preserving Users' Privacy", 21. September 2015 (2015-09-21), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 83 - 99, XP047358358, ISSN: 0302-9743 ISBN: 978-3-540-33832-1 Zusammenfassung Seite 87, Zeile 26 - Seite 97, Zeile 20; Abbildung 2
- RICCARDO LONGO ET AL: "On the security of the Blockchain Bix Protocol and Certificates", ARXIV.ORG, CORNELL UNIVERSITY LIBRARY, 201 OLIN LIBRARY CORNELL UNIVERSITY ITHACA, NY 14853, 28. Juli 2016 (2016-07-28), XP080715457,
- Melanie Swan: "Blockchain: Blueprint for a New Economy" In: "Blockchain: Blueprint for a New Economy", 8. Februar 2015 (2015-02-08), O'Reilly, XP055279098, ISBN: 978-1-4919-2049-7 Seite 13, Zeile 34 - Seite 18, Zeile 2 Seite 19, Zeile 23 - Seite 22, Zeile 21

## Beschreibung

Die Erfindung betrifft ein Verfahren, eine Registrierungsinstanz sowie ein System umfassend unter anderem die Registrierungsinstanz zum gesicherten Verarbeiten einer Berechtigungsnachweisanfrage, wobei die Berechtigungsnachweisanfrage in einer Transaktion einer Blockchain enthalten ist.

In industriellen Automatisierungsanlagen werden im Rahmen von Sicherheitsinfrastrukturen Berechtigungsnachweise oder Security Credentials, wie beispielsweise digitale Zertifikate, eingesetzt, welche durch Zertifizierungsinstanzen oder sogenannte Certification Authorities ausgestellt werden. Dabei wird von einem Gerät innerhalb der Automatisierungsanlage ein digitales Zertifikat benutzt, um sich gegenüber einem Dritten auszuweisen. Das Zertifikat bestätigt mit Hilfe einer Signatur der Zertifizierungsinstanz, dass die im Zertifikat enthaltenen Angaben über eine Identität oder einen öffentlichen Schlüssel des Gerätes oder Subjektes korrekt sind. Digitale Zertifikate bestätigen somit insbesondere die Zuordnung eines öffentlichen Schlüssels zu einem Subjekt, wie beispielsweise einem menschlichen Nutzer oder Gerät oder einem Softwareprozess. Dem Zertifikat kann vertraut werden, da eine zentrale Zertifizierungsinstanz vorhanden ist, welcher alle an der Sicherheitsinfrastruktur teilnehmenden Nutzer vertrauen. Das Betreiben einer solchen zentralen Zertifikatsinfrastruktur ist aufwändig und die Kosten für ein Zertifikat sind somit hoch. Gleichzeitig sind insbesondere im industriellen Umfeld zahlreiche Geräte oder Prozesse auf eine zertifikatsbasierte Security-Lösung ausgerichtet. Eine Authentisierung erfolgt insbesondere mit Berechtigungsnachweisen oder digitalen Zertifikaten.

In der Druckschrift von Tanas Cristian et al.: "An integrated reward and reputation mechanism for MCS preserving users' privacy", 21. September 2015, Network and Parallel Computing; Springer International Publishing, Cham, pages 83-99, XP047358358, ISSN: 0302-9743, ISBN: 978-3-540-33832-1, wird die Kryptowährung Bitcoin als eine Möglichkeit, um Transaktionen von Individuen zu verifizieren und zu validieren, beschrieben. Dies ist insbesondere bedeutsam, wenn es sich um sensitive Daten handelt.

In der Druckschrift von Riccardo Longo et al.: On the security of the Blockchain BIX Protocol and Certificates", ARXIV.ORG, Cornell University Libray, 201 Olin Library Cornell University Ithaca, NY 14853, 28. Juli 2016, XP080715457, wird das Blockchain Bix Protokoll, mit dem Sicherheitsprobleme für sensitive Transaktionen wie elektronisches Bezahlen gelöst werden können, ohne dass eine zentrale Vertrauenseinheit erforderlich ist, beschrieben. Allerdings müssen zwischen zwei Benutzern BIX-Zertifikate ausgetauscht werden.

In der Druckschrift von Melanie Swan: "Blockchain: Blueprint for a new economy", 8. Februar 2015, O'Reilly, XP055279098, ISBN: 978-1-4919-2049-7, wird die Blockchain Technologie und ihre Anwendung in den Bereichen von Kryptowährungen, Gesundheitswesen, Verwaltungsmanagement, beschrieben.

Vor diesem Hintergrund ist es eine Aufgabe der vorliegenden Erfindung, das Verarbeiten einer Berechtigungsnachweisanfrage oder Zertifikatsanfrage effizienter zu gestalten und gleichzeitig ein sicheres Verarbeiten zu gewährleisten, so dass zulässigen Einheiten ein Berechtigungsnachweis ausgestellt werden kann.

Diese Aufgabe wird durch die in den unabhängigen Ansprüchen angegebenen Merkmale gelöst. Vorteilhafte Ausgestaltungen sind in den abhängigen Ansprüchen angegeben.

Die Erfindung betrifft ein Verfahren zum gesicherten Verarbeiten einer Berechtigungsnachweisanfrage einer einen Berechtigungsnachweis anfragenden Einheit, wobei die Berechtigungsnachweisanfrage in einer Transaktion einer Blockchain enthalten ist, wobei eine Registrierungsinstanz eine Prüfung einer Blockchain-Datenstruktur sowie der mittels der Blockchain gesicherten Transaktion durchführt und im Falle einer erfolgreichen Prüfung die Berechtigungsnachweisanfrage an eine Zertifizierungsinstanz weiterleitet.

Unter einer Berechtigungsnachweisanfrage wird im nachfolgenden beispielsweise eine Zertifikatsanfrage verstanden oder eine Zertifikatswiderrufsanfrage. Es handelt sich insbesondere um einen Datensatz, in welchem eine anfragende Einheit einen Identifier oder Identifizierer oder identifizierenden Namen oder kennzeichnende Attribute sowie einen zugeordneten öffentlichen Schlüssel bestätigt, z.B. durch eine kryptographische Prüfsumme, wie beispielsweise einen Nachrichtenauthentisierungscode oder eine digitale Signatur. Insbesondere kann eine Zertifikatsanfrage umfassend einen Subject-Identifier und einen öffentlichen Schlüssel des Subjects als digital signierte Transaktion einer Blockchain vorliegen. Mit Subject wird allgemein der Inhaber eines Zertifikats und des enthaltenen öffentlichen Schlüssels bezeichnet, z.B. ein Gerät, identifiziert über den Hersteller, das Modell oder eine Seriennummer, ein Computersystem mit Netzwerkadresse, IP-Adresse, oder URL, oder eine Person mit Name oder Email-Adresse.

Unter einer Registrierungsinstanz wird im Folgenden eine Instanz verstanden, welcher nicht aufgrund einer besonderen Stellung durch Nutzer vertraut werden muss. Es ist insbesondere keine einer zentralen Zertifizierungsinstanz zugeordnete Registrierungsinstanz. Es handelt sich um eine insbesondere dezentrale Einrichtung, welche eingehende Berechtigungsnachweisanfragen prüft und verarbeitet und an eine Zertifizierungsinstanz weiterleitet. Die Zertifizierungsinstanz kann eine zentrale Einheit sein, oder es können mehrere Zertifizierungsinstanzen dezentral vorliegen. Erfindungsgemäß kann mit der Blockchain eine gemeinsame Infrastruktur für Zertifikatsanfragen durch mehrere Zertifizierungsinstanzen genutzt werden.

Die Blockchain-Technologie realisiert eine verteilte, dezentrale Datenbank, in der Transaktionen manipulationsgeschützt ablegbar sind. Dafür werden Transaktionen in einem Block hinterlegt. In einer solchen Blockchain-Datenstruktur ist neben einer oder mehreren Transaktionen ein Hashwert eines Vorgängerblockes hinterlegt. Der Schutz entsteht durch eine Mehrheit von vertrauenswürdigen Knoten in einem Blockchain-Netzwerk, welche ein sogenanntes Mining oder Validieren von Blöcken durchführt. Im Netz der an einer Blockchain teilnehmenden Knoten wird in regelmäßigen Abständen, beispielsweise alle 10 Minuten, ein neuer Block gebildet und dabei der Hashwert eines bestehenden Blockes mit hinterlegt. Bei diesem Mining-Prozess wird die Gültigkeit von im Block zu hinterlegenden Transaktionen geprüft. Zusätzlich wird ein sogenanntes kryptographisches Puzzle gelöst, für welches die Mining-Knoten Rechenkapazität aufbringen müssen. Der Aufwand wird beispielsweise durch einen bestimmten Betrag in der Kryptowährung, auf der die Blockchain beruht, belohnt. Das Lösen des kryptographischen Puzzles wird auch als Proof-of-Work-Nachweis bezeichnet. Es wird die Lösung einer rechenintensiven Aufgabe nachgewiesen, welche abhängig vom Inhalt eines Blockes zu lösen ist. Die Kette der Blöcke ist bei einer Vielzahl von Blockchain Knoten gespeichert, es erfolgt eine Synchronisation der teilnehmenden Knoten. Die Information zu den Transaktionen ist also redundant im Netz hinterlegt.

Da alle Blöcke basierend auf bestehenden Blöcken gebildet werden, indem der Hashwert des Vorgängerblockes in einen neuen Block eingefügt wird, bildet sich eine Kette. Die Transaktionen sind somit vor Manipulation geschützt, da eine Kette bis zu einem initialen Block, auch Genesisblock genannt, durch die Verkettung der Blöcke nachvollzogen werden kann. Da die Transaktionen über das Blockchain-Netz verfügbar sind, kann nachvollzogen werden, ab welchem Block in der Kette beispielsweise ein Inhalt einer Transaktion nicht mehr mit vorherigen Versionen übereinstimmt. Die Transaktionen sind also manipulationsgeschützt in jeder verifizierten Blockchain hinterlegt. Ein Abändern einer Transaktion in einem Block, der bereits zu einem früheren Zeitpunkt im Netzwerk gebildet wurde, würde nachvollzogen werden können, wenn eine Prüfsummenbildung über die bestehenden Blöcke nachvollzogen wird.

Innerhalb eines Blockchain-Netzwerkes, das öffentlich ist, und in dem daher nicht jedem Knoten einzeln vertraut werden kann, wird ein Block durch Dritte im Netz befindliche Knoten, die insbesondere kein eigenständiges Mining durchführen, insbesondere dadurch validiert, dass eine bestimmte Zeit nach Erstellen des Blockes oder eine gewisse Anzahl an nach dem Block gebildeten Blöcken abgewartet wird, bis die Kette lange genug ist, dass ihr vertraut werden kann. Beispielsweise bildet sich parallel ein anderer Kettenpfad aus, der sich als nicht vertrauenswürdig herausstellt, da die Mehrzahl der Knoten die Transaktionen der darin gebildeten Blöcke oder eines Blockes nicht verifiziert, sondern stattdessen weitere Blöcke in der vertrauenswürdigen längeren Kette bildet. Dafür darf ein Angreifer nicht über mehr Rechenkapazität als der Rest der Blockchain gemeinsam verfügen, da er sonst durch ein betrügerisches eigenes Mining selbst schneller ausreichend lange Ketten bildet könnte.

Eine Blockchain-Datenstruktur oder ein Block umfasst Transaktionsdaten und mindestens einen Hashwert, der abhängig von einem Vorgängerblock gebildet ist. Dadurch wird eine Kette aus Transaktionen gebildet. Einmal in der Kette auftauchende Transaktionen sind nicht mehr unbemerkt veränderbar. Die Transaktionsdaten betreffen eine Transaktion oder mehrere Transaktionen. In einer Blockchain-Datenstruktur sind insbesondere eine Prüfsumme von Transaktionsdaten oder diese Prüfsumme sowie weitere Daten wie beispielsweise ein Zeitstempel enthalten. Beispielsweise wird eine Prüfsumme von Transaktionsdaten, welche aus mehreren Transaktionen bestehen, gebildet. Für die Prüfsummenbildung kommen insbesondere kryptographische Hash-Funktionen zum Einsatz.

Durch sogenanntes Mining der Blöcke gegen ein Incentive, welches beispielsweise durch einen Betrag der Kryptowährung geschaffen wird, besteht ein Interesse der dezentralen Netzstruktur, Blöcke als korrekt zu bestätigen oder zu validieren, d.h. ein Mining durchzuführen. Sofern die Mehrheit der Rechenkapazität in einem solchen verteilten Netz frei von Angreifern ist, d.h. kein Angreifer mehr Blöcke durch Mining ausgeben kann, insbesondere mehr kryptographische Puzzle lösen kann, als die vertrauenswürdigen Knoten zusammengenommen, kann einer Blockchain ab einer bestimmten Länge und insbesondere einem einzelnen Block nach einer gewissen Anzahl in einem Pfad der Kette nachfolgenden Blöcken vertraut werden.

Bekannte Blockchain-Systeme sind Bitcoin und Ethereum. Während Bitcoin ursprünglich für Kryptowährungstransfers geschaffen wurde, baut Ethereum auf das Einbinden von sogenannten Smart Contracts auf. Die in einem Smart Contract vereinbarten Bedingungen werden durch die Blockchain gesichert und der Vertrag selbst wird über das Netz abgewickelt. Das Umsetzen der Vertragsbedingungen wird über dazugehörige durchgeführte Transaktionen kontrolliert und in einem programmierten Smart Contract vorgesehene Folgeaktionen können je nach erfolgter Transaktion durchgeführt werden.

Für nicht-öffentliche Blockchain-Systeme sind auch Blockchains denkbar, bei denen ein Mining ohne Incentive durchgeführt wird, da beispielsweise allen Knoten vertraut wird.

Die Transaktionsdaten werden insbesondere nicht in Klartext in die Blockchain eingefügt, sondern es wird zur Bildung der Transaktionsdaten ein Hashwert der Transaktion gebildet. Die Transaktion selbst ist ebenfalls im Blockchain-Netzwerk verfügbar. Somit kann ein Überprüfen der Transaktion durch Mining-Knoten oder Miner durchgeführt werden. Die Transaktion in Klartext wird also im Netz verteilt und insbesondere von einem Gerät an einen oder mehrere Blockchain-Knoten gesendet.

Auf vorteilhafte Weise ist die Berechtigungsnachweisanfrage in einer Transaktion enthalten und die Registrierungsinstanz führt eine Prüfung einer Blockchain-Datenstruktur sowie von mittels der Blockchain gesicherten Transaktion durch. Die Transaktion und somit die Berechtigungsnachweisanfrage werden durch die Blockchain gesichert. Insbesondere kann die Berechtigungsnachweisanfrage im Nachhinein nicht mehr verändert werden und Informationen, welche im Rahmen der Berechtigungsnachweisanfrage an die Registrierungsinstanz übermittelt wurden, sind manipulationsgeschützt in der Blockchain abgelegt.

Wurde die Transaktion durch das Mining von Blöcken in die Blockchain-Datenstruktur aufgenommen, so sind die Informationen der Berechtigungsnachweisanfrage in der Kette der Blockchain festgeschrieben, zumindest solange die Blockchain existiert. Vertraut werden kann der Transaktion dann, wenn eine Prüfung der Blockchain-Datenstruktur erfolgreich ist, d.h. wenn aufgrund der im Blockchain-Netzwerk existierenden Blockchain-Datenstruktur davon ausgegangen werden kann, dass ein Mining der Transaktion bzw. des Blockes der Transaktion rechtmäßig oder valide ist. Dies wird insbesondere anhand der Länge einer Blockchain überprüft oder anhand einer Anzahl von auf einen Block mit der Transaktion nachfolgenden Blöcken.

Im Falle einer erfolgreichen Prüfung wird die Berechtigungsnachweisanfrage an eine Zertifizierungsinstanz weitergeleitet. Die Rechtmäßigkeit der Berechtigungsnachweisanfrage wird über eine dezentrale Sicherheitsinfrastruktur bereitgestellt. Eine aufwändige zentrale Instanz, welche die Berechtigungen oder Informationen hinter einer Anfrage überprüfen muss, entfällt auf vorteilhafte Weise. Stattdessen wird eine dezentral im Netz verfügbare Rechenkapazität genutzt, welche von den sogenannten Mining-Knoten eingesetzt wird, um gegen eine versprochene Vergütung das Mining durchzuführen. Dieses Mining beinhaltet die aufwändige Überprüfung von Zertifikatsanfragen, welche nun dezentral statt zentral durchgeführt werden. Alternativ erfolgt das Mining mit Hilfe von Smart Contracts, welche ebenfalls innerhalb des Blockchain-Netzwerkes verteilt werden und selbst durch Mining verschiedener Blöcke validiert wurden.

Administrative Prozesse zum Ausstellen eines Berechtigungsnachweises, wie eines digitalen Zertifikates, werden deutlich vereinfacht. Das aufwändige Überprüfen einer Zertifikatsanfrage wird in eine Blockchain-Plattform verlagert und das Überprüfen einer Anfrage durch eine Registrierungsinstanz dadurch deutlich effizienter gestaltet. Gleichzeitig kann eine Security-Lösung mit zertifikatsbasierter Authentisierung verwendet werden. Systeme, Anlagen oder einzelne Geräte, welche bisher mit digitalen Zertifikaten arbeiten, müssen nicht umgerüstet werden und insbesondere nicht Blockchain-enabled sein. Insbesondere ist es nicht nötig, dass beispielsweise ein Gerät direkt an einer Blockchain-Plattform teilnimmt und eine Zuordnung eines öffentlichen kryptographischen Schlüssels zu einem Identifier hinterlegt. Es kann im Gegenteil gemäß dem beschriebenen Ansatz eine herkömmliche PKI-Sicherheitsinfrastruktur verwendet werden und es können akzeptierte Sicherheitstechnologien, wie eine zertifikatsbasierte Authentisierung, verwendet werden. Somit wird der Betrieb einer PKI vereinfacht und gleichzeitig werden Kosten für Zertifikate verringert. Besonders vorteilhaft ist die Anwendung für eine relativ geringe Anzahl benötigter Zertifikate, beispielsweise einige 10 oder 100 benötigter Zertifikate, für welche sich eine Public-Key-Infrastruktur mit zentraler Zertifizierungsinstanz nicht rechnet.

Gemäß einer Ausgestaltung stellt die Zertifizierungsinstanz den Berechtigungsnachweis aus und stellt diesen einem Client bereit. Der Client ist dabei die anfragende Einheit und möchte einen Berechtigungsnachweis für sich selbst oder ein anderen Subjekt, zum Beispiel ein embedded system einer Anlage, erlangen. Die Zertifizierungsinstanz verfügt über die entsprechenden privaten Schlüssel zur Signatur der Berechtigungsnachweisanfrage. In einer Variante erfolgt das Bereitstellen über die Registrierungsinstanz. Beispielsweise wird die Kommunikationsbeziehung zwischen einem anfragenden Gerät und der Registrierungsinstanz zur Übermittlung der Berechtigungsnachweisanfrage genutzt.

Auf vorteilhafte Weise kann ein sogenannter Certificate as a Service Mechanismus eingeführt werden. Zertifikate, welche durch die Zertifizierungsinstanz ausgestellt werden, sind beispielsweise zeitlich begrenzt und für ein erneutes Erhalten eines gültigen Zertifikates ist ein Übermitteln einer neuen Transaktion erforderlich. Diese Transaktion beinhaltet auch den Austausch eines Kryptogeldbetrages, so dass eine Vergütung einer Blockchain-basierten Zertifikatsausstellung realisierbar ist. Insbesondere für Größenordnungen, in denen das Einrichten einer zentralen Zertifizierungsinstanz, welche selber die Überprüfung der Anfragen vornimmt, nicht lohnend ist, kann so dennoch gegen Bezahlung ein Ausstellen eines Zertifikates angeboten werden. Das ausgestellte Zertifikat ist angepasst an die benötigte Nutzungsdauer, da ein erneutes Anfordern eines Zertifikates beispielsweise nach einer gewissen Zeitdauer nicht mehr erfolgt.

Gemäß einer Ausgestaltung umfasst die Transaktion von einem Client erstellte und zur Berechtigungsnachweisanfrage gehörige Informationen, insbesondere Attributinformationen. Beispielsweise wird in der Information ein Identifizierer oder ein Name einer den Berechtigungsnachweis anfragenden Einheit übermittelt. Ferner wird beispielsweise ein zu der anfragenden Einheit gehöriger öffentlicher kryptographischer Schlüssel übermittelt.

Gemäß einer Ausgestaltung umfasst die Prüfung der Blockchain-Datenstruktur durch die Registrierungsinstanz ein Überprüfen einer Blockchain-Länge oder von einem geprüften Block vorausgehenden und nachfolgende Blöcken. Eine Registrierungsinstanz kann sich somit auf die Vertrauenswürdigkeit von Transaktionen verlassen, welche in einer etablierten Blockchain enthalten sind. Dafür muss sich die Kette der Blöcke mit den relevanten Transaktionen durchgesetzt haben gegenüber gegebenenfalls vorhandenen anderen Pfaden der Kette, welche beispielsweise durch fehlerhaftes Mining oder durch Angreifer ebenfalls erstellt wurden. Das Überprüfen durch eine lokale Registrierungsinstanz wird somit auf vorteilhafte Weise sehr effizient durchgeführt. Das aufwändige Überprüfen einer Berechtigungsnachweisanfrage wird in die Blockchain verlegt, die die Transaktion mit der Berechtigungsnachweisanfrage dezentral überprüft. Beispielsweise erfolgt dieses Überprüfen mit Hilfe von Smart Contracts, deren Sicherheit wiederum auf der Blockchain beruht. Beispielsweise werden Vorprüfungen durchgeführt, damit eine Überprüfung einer Berechtigungsnachweisanfrage bei erfolgreich durchlaufener Vorprüfung beschleunigt wird. Beispielsweise umfasst diese Vorprüfung das aufwändige Recherchieren von Identitäten oder Rollen und damit verbundenen Rechten und Pflichten.

Gemäß einer Ausgestaltung umfasst die Prüfung der Transaktion durch die Registrierungsinstanz ein Überprüfen von Daten in der Transaktion daraufhin, ob eine Zugehörigkeit zur Registrierungsinstanz oder zu der der Registrierungsinstanz zugeordneten Zertifizierungsinstanz erkennbar ist. Somit werden auf vorteilhafte Weise nur die Transaktionen und zugehörigen Blockchain-Abschnitte überprüft, welche die Registrierungsinstanz betreffen. In einer anderen Variante kann ein Knoten die Blockchain prüfen, sodass er alle gültigen, durch die Blockchain bestätigten Transkationen kennt. Danach filtert er beispielsweise diejenigen Transaktionen heraus, die ihn betreffen, beispielsweise nur die aktuellste Transaktion. Falls die aktuelle ihn betreffende Transaktion vollständig ist und nicht nur Änderungen enthält, braucht er beispielsweise nicht notwendigerweise die früheren Transaktionen. Es sind weitere, optimierte Verfahren denkbar zur Ermittlung relevanter Berechtigungsnachweisanfragen oder Certificate Signing Requests. Beispielsweise wird heuristisch gesucht. Ist bekannt, dass eine Anfrage zu bestimmten Zeitpunkten gesendet wird, so können gezielt Blöcke und die darin bestätigten Transaktionen durchsucht werden, die in einem entsprechenden Zeitraum liegen.

Gemäß einer anderen Ausgestaltung umfasst eine Prüfung der Transaktion durch die Registrierungsinstanz ein Überprüfen daraufhin, ob mindestens aufgrund eines in der Transaktion gebotenen Kryptowährungsbetrages das Ausstellen des Berechtigungsnachweises für die anfragende Einheit durch die Zertifizierungsinstanz vorgesehen ist. Das Ausstellen eines Zertifikates wird somit daran gekoppelt, wie viel Geld in Kryptowährung in der Anfrage geboten wird.

Es kann ferner ein Smart Contract in der Transaktion mit der Berechtigungsnachweisanfrage enthalten sein, welcher eine Vergütung der ausstellenden Zertifizierungsinstanz vorsieht. Beispielsweise werden dafür Kriterien für zulässige oder vertrauenswürdige Zertifizierungsinstanzen hinterlegt. In einem solchen Szenario kann das Ausstellen des Zertifikates durch mehrere Zertifizierungsinstanzen erfolgen. Es wird somit ein offener Markt für Public-Key-Infrastruktur-Dienste realisiert.

Gemäß einer Ausgestaltung wird in der Berechtigungsnachweisanfrage ein Ausstellen eines digitalen Zertifikates oder eines Security Tokens mit definierter Zuordnung eines Subjektes zu einem kryptographischen Schlüssel angefragt oder ein Ausstellen eines Widerrufs eines digitalen Zertifikates oder eines Widerrufs eines Security Tokens mit definierter Zuordnung eines Subjektes zu einem kryptographischen Schlüssel. Die anfragende Einheit ist insbesondere das Subjekt selbst, beispielsweise ein Gerät, oder wird durch ein Projektierungstool einer Automatisierungsanlage durchgeführt, welches für verschiedene Geräte jeweilige Zertifikate anfordert. Die Anfrage kann das Ausstellen von Zertifikaten betreffen sowie den Widerruf von ausgestellten Zertifikaten.

Unter einem Berechtigungsnachweis oder einem Zertifikat wird insbesondere ein X.509 Zertifikat, ein Gerätezertifikat, ein Nutzerzertifikat oder ein Attributzertifikat verstanden. Allgemein kann es sich dabei um ein Security Token wie z.B. ein Kerberos Ticket, JSON Web Token oder SAML-Token, handeln, d.h. eine durch eine kryptographischen Prüfsumme einer ausstellenden Instanz bestätigte Datenstruktur, die eine Security-Information, wie beispielsweise einen öffentlichen Schlüssel oder ein Attribut oder eine Berechtigung oder eine Rolle einem Subjekt zuordnet. Ebenso kann eine Zertifikatswiderrufsinformation, eine sogenannte Certificate Revocation List, eine Zertifikatsstatusinformation, eine sogenannte Online Certificate Status Protocol Response, kurz OCSP-Response, oder eine Zertifikatsgültigkeitsinformation, eine sogenannte Certificate White List, basierend auf den Transaktionen der Blockchain erzeugt und bereitgestellt werden. Beispielsweise wird abhängig vom Prüfergebnis der Blockchain-Datenstruktur eine Zertifikatswiderrufsliste oder eine Zertifikats-White-List aktualisiert oder es wird eine davon abhängige OCSP-Response bereitgestellt.

In einer Ausgestaltung wird einem durch die Zertifizierungsinstanz ausgestellten digitalen Zertifikat oder Security Token oder einem ausgestellten Widerruf eines digitalen Zertifikates oder Security Tokens als Information eine Erweiterung hinzugefügt, dass ein Blockchain-basiertes Verarbeiten der Berechtigungsnachweisanfrage durchgeführt wurde. Beispielsweise wird ein Flag hinzugefügt, dass das Zertifikat Blockchain-basiert ausgestellt wurde. Beispielsweise wird eine Referenz auf die verwendete Blockchain-Plattform oder Blockchain-Infrastruktur oder eine Referenz der zur Beantragung verwendeten Transaktion oder den die Transaktion enthaltenden Block eingetragen. Der Prozess zur Beantragung und Ausstellung eines Zertifikates wird somit durch Dritte nachvollziehbar und überprüfbar. Somit kann ein ausgestelltes Zertifikat daraufhin überprüft werden, welche Blockchain-Transaktionen zum Ausstellen des Zertifikats geführt haben. Ein Vertrauensstatus des Zertifikats kann auf vorteilhafte Weise eingeschätzt werden oder durch Kennzeichnungen angepasst werden.

In einer Ausgestaltung berücksichtigt die Registrierungsinstanz in der Prüfung der Transaktion weitere Transaktionen, insbesondere Transaktionen mit Angaben Dritter zur Vertrauenswürdigkeit einer anfragenden Einheit. Es kann somit zusätzlich ein Mechanismus eingeführt werden, dass neben der erfolgreichen Prüfung der Blockchain-Datenstruktur zusätzlich eine Querbestätigung vorliegen muss, welche insbesondere wiederum über die Blockchain gesichert wird, und die beispielsweise die Vertrauenswürdigkeit und Berechtigung der anfragenden Einheit auf einem zweiten Weg bestätigt.

Gemäß einer Ausgestaltung wird eine Ausstelltransaktion des Ausstellens des Berechtigungsnachweises gebildet und in die Blockchain-Datenstruktur eingefügt, insbesondere auf Basis des ausgestellten Berechtigungsnachweises. Ein digitales Zertifikat wird somit beispielsweise vorzugsweise ebenfalls als Transaktion bereitgestellt, d.h. die Zertifizierungsinstanz erzeugt beispielsweise eine Blockchain-Transaktion, die vom ausgestellten Zertifikat abhängt. Die Transaktion kann beispielsweise einen Uniform Resource Locator, kurz URL, enthalten, von welchem das Zertifikat ladbar ist. Alternativ ist das Zertifikat selbst in der Transaktion enthalten.

Die Erfindung betrifft ferner eine Registrierungsinstanz zum gesicherten Verarbeiten einer in einer Transaktion enthaltenen Berechtigungsnachweisanfrage einer einen Berechtigungsnachweis anfragenden Einheit, geeignet zur Prüfung einer Blockchain-Datenstruktur sowie der mittels der Blockchain gesicherten Transaktion und zur Weiterleitung der Berechtigungsnachweisanfrage an eine Zertifizierungsinstanz im Falle einer erfolgreichen Prüfung.

Gemäß einer Ausgestaltung ist die Registrierungsinstanz ferner geeignet zum Überprüfen von Daten in der Transaktion daraufhin, ob eine Zugehörig zur Registrierungsinstanz oder zur der Registrierungsinstanz zugeordneten Zertifizierungsinstanz erkennbar ist.

Gemäß einer Ausgestaltung ist die Registrierungsinstanz ferner geeignet zum Überprüfen daraufhin, ob zumindest aufgrund eines in der Transaktion gebotenen Kryptowährungsbetrages das Ausstellen des Berechtigungsnachweises für die anfragende Einheit durch die Zertifizierungsinstanz vorgesehen ist.

Gemäß einer Ausgestaltung ist die Registrierungsinstanz ferner geeignet, eine Erweiterung zu generieren, die ein Blockchain-basiertes Verarbeiten der Berechtigungsnachweisanfrage bestätigt, und zur Weiterleitung der Erweiterung an die Zertifizierungsinstanz zur Einbindung in einen ausgestellten Berechtigungsnachweis.

Gemäß einer Ausgestaltung ist die Registrierungsinstanz ferner geeignet, in der Prüfung der Transaktion weitere Transaktionen zu berücksichtigen, insbesondere Transaktionen mit Angaben Dritter zur Vertrauenswürdigkeit einer anfragenden Einheit.

Die Erfindung betrifft ferner ein System umfassend eine Registrierungsinstanz gemäß den oben beschriebenen Ausführungsformen sowie ferner eine Zertifizierungsinstanz zum Ausstellen eines Berechtigungsnachweises und Bereitstellen des Berechtigungsnachweises an einen Client.

Gemäß einer Ausgestaltung ist die Registrierungsinstanz oder die Zertifizierungsinstanz ferner geeignet, eine Ausstell-transaktion des Ausstellens des Berechtigungsnachweises zu bilden, so dass die Ausstelltransaktion in die Blockchain-Datenstruktur einfügbar ist, insbesondere auf der Basis des ausgestellten Berechtigungsnachweises.

Die Registrierungsinstanz und Zertifizierungsinstanz sind Einheiten, welche hardwaretechnisch und/oder auch softwaretechnisch implementiert sein können. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Erfindung wird nachfolgend mit Hilfe von Ausführungsbeispielen anhand der Figuren näher erläutert. Es zeigen:
- Figur 1: eine schematische Darstellung eines Systems aus Geräten einer Automatisierungsanlage mit einer Registrierungs- und einer Zertifizierungsinstanz gemäß einem ersten Ausführungsbeispiel der Erfindung;
- Figur 2: eine schematische Darstellung einer Datenstruktur einer Transaktion gemäß einem zweiten Ausführungsbeispiel.

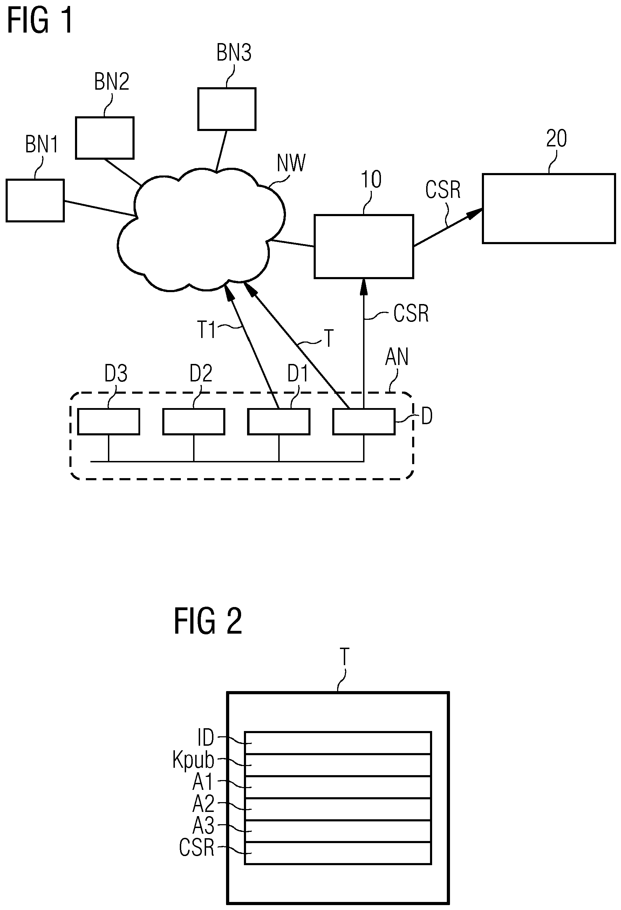

In Figur 1 ist schematisch dargestellt, wie ein Automatisierungsnetzwerk AN, bestehend aus mehreren Feldgeräten D1, D2, D3, und ein Geräte-Router D mit einer Registrierungsinstanz 10 und einer Zertifizierungsinstanz 20 zusammenspielen. Die Registrierungsinstanz 10 sowie ein oder mehrere der Geräte D1 bis D3 sind über ein Netzwerk NW mit einer Blockchain-Plattform, stellvertretend durch drei Blockchain-Knoten BN1, BN2, BN3 abgebildet, verbunden. Im beschriebenen Beispiel soll das Gerät D1 ein Zertifikat erhalten. Dafür sendet das Gerät D1 eine Transaktion Tl, welche insbesondere eine Berechtigungsnachweisanfrage CSR enthält, an das Blockchain-Netzwerk.

In einer anderen Variante sendet das Gerät D1 seine Berechtigungsnachweisanfrage CSR, den sogenannten Certificate Signing Request, an die Registrierungsinstanz 10, welche die Transaktion zur Verteilung im Blockchain-Netzwerk NW weiterleitet.

Auf vorteilhafte Weise findet eine Vorprüfung des Gerätes D1 statt zu einem Zeitpunkt, an dem eine aufwändige Prüfung auf Berechtigung des Gerätes D1 nicht ins Gewicht fällt oder nicht stört. Über diese Vorprüfungen werden Rahmenverträge abgeschlossen, die dem Gerät D1 durch die Validierung in der Blockchain-Plattform gewisse Berechtigungen für eine Zertifikatsanfrage in einem Smart Contract bestätigen. Insbesondere geschieht das Senden der Transaktionen mit dem Ziel, eine Validierung der Transaktionen durch die Blockchain zu erlangen, im Voraus zu einem Prozess, in welchem tatsächlich ein Zertifikat angefragt wird. Beispielsweise wird zum Zeitpunkt, zu welchem ein Zertifikat durch ein Gerät D1 benötigt wird, durch das Gerät D1 eine Berechtigungsnachweisanfrage CSR direkt an die Registrierungsinstanz 10 gesendet und die Berechtigungsnachweisanfrage enthält oder verweist auf den bestehenden Smart Contract als Rahmenvertrag.

In einer Variante ist ein Geräte-Router D in der Automatisierungsanlage vorgesehen, welcher für ein oder mehrere Geräte D1 bis D3 die Zertifikatsanfragenachrichten an die Registrierungsinstanz 10 schickt und welcher auch insbesondere für das Übermitteln der Transaktionen über das Blockchain-Netzwerk zuständig ist.

Die Registrierungsinstanz 10 prüft, ob Transaktionen der Blockchain sie selbst oder eine zugeordnete Zertifizierungsinstanz 20 betreffen. Findet sie einen gültigen Eintrag mit einer Anfrage für ein Zertifikat, welches von der Zertifizierungsinstanz 20 ausgestellt werden kann, so leitet sie den in der Transaktion enthaltenen Certificate Signing Request CSR an die Zertifizierungsinstanz 20 weiter. Dies geschieht nur, falls die Registrierungsinstanz 10 der Blockchain oder einem Ausschnitt aus der Kette der gebildeten Blöcke, die die Transaktion betreffen, vertraut. Insbesondere handelt es sich bei der Blockchain-Plattform um das auf Bitcoin basierende Blockchain-System oder um die Plattform des Ethereum-Netzwerkes. Es wird darauf vertraut, dass die Rechenkapazität der gutartigen Miner in der Blockchain eine Rechenkapazität eines Angreifers übertrifft. Wird dann beispielsweise eine ausreichende Zeit abgewartet, so dass sich eine Kette stabil gebildet hat und eine Transaktion in einem der Blöcke der Kette von ausreichend vielen Knoten als valide bestätigt wurde, so wird der Transaktion vertraut.

Es können beliebige weitere Mechanismen vorgesehen sein, die einen Quercheck der Transaktion oder der darin enthaltenen Berechtigungsnachweisanfrage CSR durch die Registrierungsinstanz 10 ermöglichen, um die Sicherheit in dem System weiter zu erhöhen. Beispielsweise weist die Transaktion eine kryptographische Prüfsumme auf, welche zumindest Teile der Transaktion schützt. Es kann beispielsweise explizit eine digitale Signatur eingetragen werden, welche durch einen Betreiber mit zugehörigem privatem Schlüssel signiert wurde. Während diese Information beispielsweise von Blockchain-Knoten, welche ein Mining durchführen, nicht weiter beachtet wird, kann die Registrierungsinstanz 10 diese Information für eine kryptographische Überprüfung der anfragenden Einheit auswerten. Dies kann zusätzlich geschehen und erhöht die Sicherheit neben der dezentralen Überprüfung.

Die zur Berechtigungsnachweisanfrage CSR gelieferten Informationen können auf mehrere Transaktionen verteilt werden, beispielsweise eine separate Transaktion je Attribut. Beispielsweise ist eine separate Transaktion zur Bestätigung der Angaben durch einen Dritten im Blockchain-Netzwerk verfügbar und wird Bestandteil eines Blockes, beispielsweise wird eine weitere Transaktion zur Antragstellung der Zertifikatsausstellung übermittelt und kann separat validiert werden. Die Zertifizierungsinstanz 20 stellt entsprechend der durch die Registrierungsinstanz 10 weitergeleiteten Berechtigungsnachweisanfrage CSR den passenden Berechtigungsnachweis aus. Es handelt sich beispielsweise um ein Zertifikat oder um den Widerruf eines Zertifikates. Im beschriebenen Ausführungsbeispiel stellt die Zertifizierungsinstanz 20 eine Transaktion bereit, welche das Ausstellen des Zertifikates definiert. Diese Transaktion kann beispielsweise direkt von der Zertifikatsinstanz 20 an das Blockchain-Netzwerk NW weitergeleitet werden oder über die Registrierungsinstanz, welche mit dem Blockchain-Netzwerk gekoppelt ist und die Daten des Blockchain-Netzwerkes über eine Netzwerkverbindung empfängt.

Das Zertifikat wird beispielsweise durch die Zertifizierungsinstanz 20 direkt an das Gerät oder an das Automatisierungsnetzwerk geliefert oder über die Registrierungsinstanz 10. Insbesondere sind Zertifizierungsinstanz 20 und Registrierungsinstanz 10 als eine gemeinsame Einheit ausgebildet.

Beispielsweise ist in einer Industrieautomatisierungsanlage neben einer Registrierungsinstanz, welche die Zertifikatsanfragen mehrerer Geräte erhält, mindestens eine lokale Registrierungseinheit vorgesehen, welche lokale Prüfungen der Anfragenachrichten durchführen. Da im beschriebenen Ausführungsbeispiel die aufwändige Überprüfung durch lokale Instanzen entfällt, können die lokalen Registrierungsinstanzen aufgehoben werden und lediglich eine Registrierungsinstanz 10 regelt die Zertifikatsausstellung mittels des Austausches mit der Blockchain.

In Figur 2 ist eine Transaktion T gemäß einem zweiten Ausführungsbeispiel der Erfindung abgebildet. Beispielsweise sind folgende Einträge in der Transaktion enthalten: Ein Identifizierer ID ist angegeben als "Subject: Siemens SiABC;V1.3;SN=3175438", ein öffentlicher Schlüssel KEYPUB ist angegeben als "Public Device Key: 3A76E21876EFA03787FD629A65E9E990...", als Attribute A1, A2 und A3 sind ein Verschlüsselungsalgorithmus angegeben: "Algorithm: ECC". Als verwendete Kurve für den ECC-Algorithmus ist angegeben: "Curve: brainpoolP160r1". Als Device Commissioning Identifier ist angegeben "ProtectionSwitch037E". Außerdem ist die Berechtigungsnachweisanfrage CSR enthalten als "CertificateRequest: certFormat:X.509v3;certProfile:IEC6235;CA:VerySecure".

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum gesicherten Verarbeiten einer Berechtigungsnachweisanfrage (CSR) einer einen Berechtigungsnachweis anfragenden Einheit,
wobei die Berechtigungsnachweisanfrage (CSR) in einer Transaktion (T) einer Blockchain enthalten ist,
wobei eine Registrierungsinstanz (10) eine Prüfung einer Blockchain-Datenstruktur sowie der mittels der Blockchain gesicherten Transaktion (T) durchführt und im Falle einer erfolgreichen Prüfung die Berechtigungsnachweisanfrage (CSR) an eine Zertifizierungsinstanz (20) weiterleitet, wobei die Zertifizierungsinstanz (20) den Berechtigungsnachweis ausstellt und einem Client bereitstellt, und wobei eine Ausstell-Transaktion des Ausstellens des Berechtigungsnachweises gebildet wird und in die Blockchain-Datenstruktur auf Basis des ausgestellten Berechtigungsnachweises eingefügt wird.

2. Verfahren nach Anspruch 1, wobei die Transaktion von einem Client erstellte und zur Berechtigungsnachweisanfrage (CSR) gehörige Informationen, insbesondere ein Attribut, eine Berechtigung, eine Rolle oder öffentlichen kryptographischen Schlüssel sowie insbesondere einen Identifizierer oder Namen einer den Berechtigungsnachweis anfragenden Einheit, umfasst.

3. Verfahren nach Anspruch 1 oder Anspruch 2, wobei die Prüfung der Blockchain-Datenstruktur durch die Registrierungsinstanz (10) ein Überprüfen einer Blockchainlänge oder von einem zu prüfenden Block vorausgehenden und nachfolgenden Blöcken umfasst.

4. Verfahren nach einem der vorstehenden Ansprüche, wobei die Prüfung der Transaktion (T) durch die Registrierungsinstanz (10) ein Überprüfen von Daten in der Transaktion daraufhin umfasst, ob eine Zugehörigkeit zur Registrierungsinstanz (10) oder zur der Registrierungsinstanz zugeordneten Zertifizierungsinstanz (20) erkennbar ist.

5. Verfahren nach einem der Ansprüche 1 bis 3, wobei eine Prüfung der Transaktion durch die Registrierungsinstanz (10) ein Überprüfen daraufhin umfasst, ob mindestens aufgrund eines in der Transaktion (T) gebotenen Kryptowährungsbetrages das Ausstellen des Berechtigungsnachweises für die anfragende Einheit durch die Zertifizierungsinstanz (20) vorgesehen ist.

6. Verfahren nach einem der vorstehenden Ansprüche, wobei in der Berechtigungsnachweisanfrage (CSR) ein Ausstellen eines digitalen Zertifikats oder eines Security Tokens mit definierter Zuordnung eines Subjektes zu einem kryptographischen Schlüssel oder ein Ausstellen eines Widerrufs eines digitalen Zertifikats oder Widerruf eines Security Tokens mit definierter Zuordnung eines Subjektes zu einem kryptographischen Schlüssel angefragt wird.

7. Verfahren nach einem der vorstehenden Ansprüche, wobei die Registrierungsinstanz in der Prüfung der Transaktion (T) weitere Transaktionen berücksichtigt, insbesondere Transaktionen mit Angaben Dritter zur Vertrauenswürdigkeit einer anfragenden Einheit.

8. System umfassend eine Zertifizierungsinstanz (20) zum Ausstellen eines Berechtigungsnachweises und Bereitstellen des Berechtigungsnachweises an einen Client und eine Registrierungsinstanz (10) zum gesicherten Verarbeiten einer in einer Transaktion (T) einer Blockchain enthaltenen Berechtigungsnachweisanfrage (CSR) einer einen Berechtigungsnachweis anfragenden Einheit, geeignet zur Prüfung einer Blockchain-Datenstruktur sowie der mittels der Blockchain gesicherten Transaktion (T) und zur Weiterleitung der Berechtigungsnachweisanfrage (CSR) an die Zertifizierungsinstanz (20) im Falle einer erfolgreichen Prüfung,
wobei die Registrierungsinstanz (10) oder die Zertifizierungsinstanz (20) ferner eingerichtet sind, eine Ausstell-Transaktion des Ausstellens des Berechtigungsnachweises zu bilden, so dass die Ausstell-Transaktion in die Blockchain-Datenstruktur auf Basis des ausgestellten Berechtigungsnachweises einfügbar ist.

9. System nach Anspruch 8, ferner geeignet zum Überprüfen von Daten in der Transaktion (T) daraufhin, ob eine Zugehörigkeit zur Registrierungsinstanz (10) oder zur der Registrierungsinstanz zugeordneten Zertifizierungsinstanz (20) erkennbar ist.

10. System nach Anspruch 8, ferner geeignet zum Überprüfen daraufhin, ob zumindest aufgrund eines in der Transaktion (T) gebotenen Kryptowährungsbetrages das Ausstellen eines Berechtigungsnachweises für die anfragende Einheit durch die Zertifizierungsinstanz (20) vorgesehen ist.

11. System nach einem der Ansprüche 8 bis 10, ferner geeignet eine Erweiterung zu generieren, die ein Blockchain-basiertes Verarbeiten der Berechtigungsnachweisanfrage (CSR) bestätigt, und zur Weiterleitung der Erweiterung an die Zertifizierungsinstanz (20) zur Einbindung in einen ausgestellten Berechtigungsnachweis.

12. System nach einem der Ansprüche 8 bis 11, ferner geeignet in der Prüfung der Transaktion (T) weitere Transaktionen zu berücksichtigen, insbesondere Transaktionen mit Angaben Dritter zur Vertrauenswürdigkeit einer anfragenden Einheit.

## Claims

1. Method for securely processing a credential request (CSR) from a unit requesting a credential,
wherein the credential request (CSR) is contained in a transaction (T) of a blockchain,
wherein a registration entity (10) examines a blockchain data structure and the transaction (T) secured by way of the blockchain and, in the event of successful inspection, forwards the credential request (CSR) to a certification entity (20),
wherein the certification entity (20) issues the credential and provides it to a client, and wherein an issuance transaction of the issuance of the credential is formed and is inserted into the blockchain data structure on the basis of the issued credential.

2. Method according to Claim 1, wherein the transaction comprises information created by a client and belonging to the credential request (CSR), in particular an attribute, an authorization, a role or a public cryptographic key and in particular an identifier or name of a unit requesting the credential.

3. Method according to Claim 1 or Claim 2, wherein the inspection of the blockchain data structure by the registration entity (10) comprises checking a blockchain length or blocks preceding or following a block to be inspected.

4. Method according to one of the preceding claims, wherein the inspection of the transaction (T) by the registration entity (10) comprises checking data in the transaction as to whether it is possible to identify that they belong to the registration entity (10) or to the certification entity (20) associated with the registration entity.

5. Method according to one of Claims 1 to 3, wherein an inspection of the transaction by the registration entity (10) comprises checking as to whether at least one cryptocurrency amount offered in the transaction (T) forms a basis for the certification entity (20) to issue the credential for the requesting unit.

6. Method according to one of the preceding claims, wherein the credential request (CSR) contains a request to issue a digital certificate or a security token with the defined assignment of a subject to a cryptographic key or to issue a revocation of a digital certificate or to revoke a security token with the defined assignment of a subject to a cryptographic key.

7. Method according to one of the preceding claims, wherein the registration entity takes into account further transactions in the inspection of the transaction (T), in particular transactions containing information from third parties about the trustworthiness of a requesting unit.

8. System comprising a certification entity (20) for issuing a credential and providing the credential to a client, and a registration entity (10) for securely processing a credential request (CSR), contained in a transaction (T) of a blockchain, from a unit requesting a credential, suitable for inspecting a blockchain data structure and the transaction (T) secured by way of the blockchain and for forwarding the credential request (CSR) to the certification entity (20) in the event of a successful inspection,
wherein the registration entity (10) or the certification entity (20) are furthermore configured so as to form an issuance transaction of the issuance of the credential, such that the issuance transaction is able to be inserted into the blockchain data structure on the basis of the issued credential.

9. System according to Claim 8, furthermore suitable for checking data in the transaction (T) as to whether it is possible to identify that they belong to the registration entity (10) or to the certification entity (20) associated with the registration entity.

10. System according to Claim 8, furthermore suitable for checking as to whether at least one cryptocurrency amount offered in the transaction (T) forms a basis for the certification entity (20) to issue a credential for the requesting unit.

11. System according to one of Claims 8 to 10, furthermore suitable for generating an expansion that confirms blockchain-based processing of the credential request (CSR) and for forwarding the expansion to the certification entity (20) for incorporation into an issued credential.

12. System according to one of Claims 8 to 11, furthermore suitable for taking into account further transactions in the inspection of the transaction (T), in particular transactions containing information from third parties about the trustworthiness of a requesting unit.

## Revendications

1. Procédé de traitement sécurisé d'une demande d'attestation d'autorisation (CSR) d'une entité demandant une attestation d'autorisation,
la demande d'attestation d'autorisation (CSR) étant contenue dans une transaction (T) d'une chaîne de blocs,
une instance d'enregistrement (10) effectuant une vérification d'une structure de données en chaîne de blocs ainsi que de la transaction (T) sécurisée au moyen de la chaîne de blocs et, en cas de vérification réussie, transmettant la demande d'attestation d'autorisation (CSR) à une instance de certification (20), l'instance de certification (20) établissant l'attestation d'autorisation et la fournissant à un client, et une transaction d'établissement de l'établissement de l'attestation d'autorisation étant formée et étant intégrée dans la structure de données en chaîne de blocs sur la base de l'attestation d'autorisation établie.

2. Procédé selon la revendication 1, la transaction comprenant des informations établies par un client et faisant partie de la demande d'attestation d'autorisation (CSR), en particulier un attribut, une autorisation, un rôle ou une clé cryptographique publique ainsi que en particulier un identificateur ou un nom d'une entité demandant l'attestation d'autorisation.

3. Procédé selon la revendication 1 ou la revendication 2, la vérification de la structure de données en chaîne de blocs par l'instance d'enregistrement (10) comprenant un contrôle d'une longueur de chaîne de blocs ou de blocs qui précèdent ou suivent un bloc à vérifier.

4. Procédé selon l'une des revendications précédentes, la vérification de la transaction (T) par l'instance d'enregistrement (10) comprenant un contrôle de données dans la transaction visant à indiquer si une appartenance à l'instance d'enregistrement (10) ou à l'instance de certification (20) affectée à l'instance d'enregistrement peut être identifiée.

5. Procédé selon l'une des revendications 1 à 3, une vérification de la transaction par l'instance d'enregistrement (10) comprenant un contrôle visant à indiquer si au moins en raison d'un montant en crypto-monnaie requis dans la transaction (T), l'établissement de l'attestation d'autorisation pour l'entité demandeuse par l'instance de certification (20) est prévu.

6. Procédé selon l'une des revendications précédentes, dans lequel, dans la demande d'attestation d'autorisation (CSR), il est demandé un établissement d'un certificat numérique ou d'un security token avec une affectation définie d'un sujet à une clé cryptographique ou un établissement d'une révocation d'un certificat numérique ou révocation d'un security token avec une affectation définie d'un sujet à une clé cryptographique.

7. Procédé selon l'une des revendications précédentes, l'instance d'enregistrement prenant en compte dans la vérification de la transaction (T) d'autres transactions, en particulier des transactions avec des indications de tiers concernant la fiabilité d'une entité demandeuse.

8. Système comprenant une instance de certification (20) pour l'établissement d'une attestation d'autorisation et la fourniture de l'attestation d'autorisation à un client, et une instance d'enregistrement (10) pour le traitement sécurisé d'une demande d'attestation d'autorisation (CSR), contenue dans une transaction (T) d'une chaîne de blocs, d'une entité demandant une attestation d'autorisation, approprié pour la vérification d'une structure de données en chaîne de blocs ainsi que de la transaction (T) sécurisée au moyen de la chaîne de blocs, et pour la transmission de la demande d'attestation d'autorisation (CSR) à l'instance de certification (20) en cas de vérification réussie,
l'instance d'enregistrement (10) ou l'instance de certification (20) étant en outre agencée pour former une transaction d'établissement de l'établissement de l'attestation d'autorisation de telle sorte que la transaction d'établissement peut être intégrée dans la structure de données en chaîne de blocs sur la base de l'attestation d'autorisation établie.

9. Système selon la revendication 8, approprié en outre pour le contrôle de données dans la transaction (T) visant à indiquer si une appartenance à l'instance d'enregistrement (10) ou à l'instance de certification (20) affectée à l'instance d'enregistrement peut être identifiée.

10. Système selon la revendication 8, approprié en outre pour le contrôle visant à indiquer si, au moins en raison d'un montant de crypto-monnaie requis dans la transaction (T), l'établissement d'une attestation d'autorisation pour l'entité demandeuse par l'instance de certification (20) est prévu.

11. Procédé selon l'une des revendications 8 à 10, approprié en outre pour générer un élargissement qui confirme un traitement de la demande d'attestation d'autorisation (CSR) basé sur la chaîne de blocs, et pour la transmission de l'élargissement à l'instance de certification (20) pour l'intégration dans une attestation d'autorisation établie.

12. Système selon l'une des revendications 8 à 11, approprié en outre pour, dans la vérification de la transaction (T), prendre en compte d'autres transactions, en particulier des transactions avec des indications de tiers concernant la fiabilité d'une instance demandeuse.
